# EUROPÄISCHE PATENTSCHRIFT

(11) **EP 2 944 490 B1**
(45) Veröffentlichungstag und Bekanntmachung des Hinweises auf die Patenterteilung: **04.07.2018**
(21) Anmeldenummer: 15166608.8
(22) Anmeldetag: 06.05.2015
(51) Int. Cl.: B60J 5/04, B62D 33/027

(54) **TRANSPORTFAHRZEUG FÜR STÜCKGUT**
TRANSPORT VEHICLE FOR PIECE GOODS
VÉHICULE DE TRANSPORT POUR MATÉRIAUX EN VRAC

(30) Priorität: 16.05.2014 DE 202014102306 U
(43) Veröffentlichungstag der Anmeldung: 18.11.2015
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- WO-A1-97/34793
- WO-A1-2010/115226
- DE-A1- 10 015 545
- DE-U1- 9 207 826

## Beschreibung

Die Erfindung betrifft ein Transportfahrzeug für Stückgut, das insbesondere in Form von gepressten Ballen, wie beispielsweise Heu-, Stroh- oder Silageballen, vorliegen kann.

Aus der DE 20 2007 019 318 U1 ist ein Transportfahrzeug für gepresste Ballen aus Stroh oder Silage bekannt, bei dem eine Ladeplatteform durch Stirn- sowie Seitenwände begrenzt ist. Zum Be- und Entladen des Transportfahrzeugs können die Seitenwände in eine bodennahe Öffnungsstellung abgesenkt werden, in der diese unterhalb der Ladeplatteform angeordnet sind. In der Transportstellung verbleibt zwischen der Unterkante der Seitenwände und der Ladeplattform ein offener Bereich der wahlweise mit zusätzlichen, klappbaren Bordwänden oder Sicherungselementen, insbesondere in Form von flexiblen Spannteilen wie Planen oder Seilen oder Netzen gesichert wird.

Von Lastkraftwagen sind zudem sogenannte Flügel-Aufbauteile bekannt (vgl. DE 10 2008 049 135 A1). Hierbei handelt es sich um Wandteile des geschlossenen Aufbaus des Lastkraftwagens, die einen L-förmigen Querschnitt aufweisen und jeweils eine Seitenwand sowie einen Abschnitt der Dachwand des Aufbaus umfassen. Die Flügel-Aufbauteile sind im Bereich derjenigen Enden, die von den Abschnitten der Dachwand ausgebildet werden, um eine in Längsrichtung des Lastkraftwagens ausgerichtete Achse verschwenkbar gelagert. Mittels Öffhungsvorrichtungen, die regelmäßig in Form von Hydraulik- oder Pneumatikzylindern ausgebildet sind, können die Flügel-Aufbauteile zum Be- und Entladen des Lastkraftwagens nach oben verschwenkt werden. Nachteilig an einer solchen Ausgestaltung von zu öffnenden Seitenwänden ist der vergleichsweise große seitliche Raumbedarf, der für das Verschwenken der Flügel-Aufbauteile erforderlich ist. Steht dieser nicht zur Verfügung, kann der Lastkraftwagen nicht oder nur in sehr begrenztem Maße be- und entladen werden. Auch ist in jedem Fall zum Öffnen der L-förmigen Flügel-Aufbauteile ein Raumbedarf in Hochrichtung erforderlich, der nicht unerheblich höher als die Gesamthöhe des Aufbaus im geschlossenen Zustand ist. Steht dieser nicht zur Verfügung, kann der Lastkraftwagen wiederum nicht oder nur in sehr begrenztem Maße be- und entladen werden.

Die DE 100 15 545 A1 offenbart einen Wechselbehälter für den Gütertransport mit einem Boden, zwei Stirnwänden, einem Dach sowie zwei zu öffnenden Seitenwänden. Eine Öffhungsbewegung der Seitenwände wird von jeweils zwei Paaren von Schwenkrahmen geführt und durch hydraulische Zylinder bewirkt. Die Öffhungsbewegung ist eine kombinierte Bewegung, bei der die Seitenwände nach oben verfahren und gleichzeitig geschwenkt werden, so dass die Seitenwände aus der vertikalen, geschlossenen Stellung in eine im Wesentlichen horizontale, geöffnete Stellung oberhalb des Dachs bewegt werden. Ein dazu vergleichbarer Transportbehälter ist in der WO 2010/115226 A1 beschrieben.

Die WO 97/34793 A1 offenbart eine Seitenwand für ein Fahrzeug, die horizontal geteilt ist, wobei die beiden Wandteile über Drehgelenke miteinander verbunden sind. Geöffnet werden kann die Seitenwand mittels einer auf einem Hydraulikzylinder beruhenden Hubvorrichtung, durch die ein an dem oberen Wandteil angreifender Hubarm um eine Schwenkachse schwenkbar ist. Die Öffnungsbewegung der Seitenwand umfasst ein Schwenken des oberen Wandteils um die Schwenkachse bis hin zu einer horizontalen Ausrichtung oberhalb eines Dachs des Fahrzeugs, während der untere Wandteil durch ein Schwenken um das Drehgelenk gegen den oberen Wandteil geklappt wird.

Die DE 92 07 826 U1 offenbart einen Laderaumaufbau mit einer zu öffnenden Seitenwand, die aus einer Plane und einem an dem unteren Ende der Plane befestigten Rahmen besteht. Durch eine Kinematik aus zwei Hebelarmen und sowie einem an einem oberen Hebelarm angreifenden Hydraulikzylinder kann die Seitenwand geöffnet werden, wobei der Rahmen ausschließlich translatorisch in Hochrichtung und Querrichtung geführt wird.

Ausgehend von diesem Stand der Technik hat der Erfindung die Aufgabe zugrunde gelegen, ein Transportfahrzeug für Stückgut anzugeben, das sich vorteilhaft be- und entladen lässt. Insbesondere soll das Transportfahrzeug ein vorteilhaftes Beladen des Stückguts mit unterschiedlichen Beladungshöhen ermöglichen sowie auch in beengten Platzverhältnissen be- und entladbar sein.

Diese Aufgabe wird mittels eines Transportfahrzeugs gemäß dem Anspruch 1 gelöst. Vorteilhafte Ausgestaltungen davon sind Gegenstand der abhängigen Ansprüche und ergeben sich aus der nachfolgenden Beschreibung der Erfindung.

Der Erfindung liegt der Gedanke zugrunde, die Beladbarkeit eines Transportfahrzeugs dadurch zu verbessern, dass eine Öffnungsbewegung der Seitenwände (bis in eine vollständig geöffnete Stellung), die sowohl ein Anheben als auch ein Verschwenken in Richtung einer horizontalen Ausrichtung umfasst, in diese beiden Teilbewegungen unterteilt wird und diese Teilbewegungen nicht zwingend gleichzeitig erfolgen müssen.

Erfindungsgemäß ist ein Transportfahrzeug für Stückgut, insbesondere in Form von gepressten Ballen, wie beispielsweise Heu-, Stroh- oder Silageballen, mit einer Ladeplattform, einer vorderen Stirnwand und/oder einer hinteren Stirnwand sowie mindestens einer Seitenwand, die vorzugsweise in einer die Ladeplattform begrenzenden, geschlossenen Stellung eine vertikale Ausrichtung aufweist, vorgesehen. Die Seitenwand ist mittels einer ersten Öffnungsvorrichtung zunächst in Hochrichtung des Transportfahrzeugs verfahrbar und anschließend mittels einer zweiten Öffnungsvorrichtung um eine in Längsrichtung des Transportfahrzeugs ausgerichtete Achse (nach außen) verschwenkbar. Dazu ist eine mit der vorderen Stirnwand und/oder der hinteren Stirnwand verbundene Tragstruktur vorgesehen, an der drehbeweglich ein Tragarm für die Seitenwand befestigt ist, wobei der Tragarm drehbeweglich mit der Seitenwand verbunden und die erste Öffnungsvorrichtung zwischen der Tragstruktur und dem Tragarm abgestützt ist. Weiterhin ist die zweite Öffnungsvorrichtung drehbeweglich an der Tragstruktur und der Seitenwand befestigt, wobei die Abstände zwischen den Drehachsen der drehbaren Befestigungen des Tragarms und der zweiten Öffnungsvorrichtung an einerseits der Tragstruktur und andererseits der Seitenwand gleich sind
Das Verfahren in Hochrichtung kann vorzugsweise rein translatorisch erfolgen und/oder das Verschwenken als reine Rotation ausführbar sein. Zudem kann das Verfahren der Seitenwand gegebenenfalls bis zum Erreichen einer Zwischenendstellung erfolgen. Dabei wird unter "Zwischenendstellung" verstanden, dass kein weiteres Verfahren in Hochrichtung mehr möglich ist.

Erfindungsgemäß ist nicht erforderlich, dass für ein Öffnen der Seitenwand immer zunächst ein Verfahren in Hochrichtung und anschließend ein Verschwenken der Seitenwand, insbesondere bis in eine vollständig geöffnete Stellung, erfolgen muss. Erfindungswesentlich ist lediglich die konstruktive Ausgestaltung des Transportwagens derart, dass eine solche Bewegungsabfolge möglich beziehungsweise ausführbar ist.

Das erfindungsgemäße Transportfahrzeug kann vorzugsweise zwei Seitenwände aufweisen, von denen zudem bevorzugt beide entsprechend zu öffnen sind. Dadurch kann eine Beladbarkeit von beiden Seiten ermöglicht werden.

Ein erfindungsgemäßes Transportfahrzeug kann sich dadurch auszeichnen, dass der seitliche Raumbedarf zum Öffnen der Seitenwand in Bodennähe reduziert ist.

Besonders gering kann der seitliche Raumbedarf sein, wenn, wie grundsätzlich bevorzugt vorgesehen, die Seitenwand bei dem Verfahren in Hochrichtung auch in Richtung einer (von der Fahrzeuglängsachse und der Fahrzeughochachse definierten) Längshochebene des Transportfahrzeugs, d.h. in Richtung der Fahrzeugmitte (bezogen auf die Querrichtung) des Transportfahrzeugs, bewegt wird.

Besonders vorteilhaft be- und entladbar ist das erfindungsgemäße Transportfahrzeug, wenn die erste Öffnungsvorrichtung und die zweite Öffnungsvorrichtung voneinander unabhängig betätigbar sind. Dadurch kann eine besonders variable Be- und Entladbarkeit des Transportfahrzeugs erreicht und insbesondere eine möglichst exakte Anpassung der Öffnungsbewegung der Seitenwand an den seitlich und oberhalb des Transportfahrzeugs vorliegenden Raum ermöglicht werden. So kann beispielsweise vorgesehen sein, dass bei sehr beengten seitlichen Platzverhältnissen lediglich ein Verfahren der Seitenwand in Hochrichtung und kein Verschwenken vorgenommen wird. Ist dieses Verfahren in Hochrichtung zudem mit einem Bewegen der Seitenwand in Richtung der Fahrzeugmitte verbunden, kann gegebenenfalls noch ein Verschwenken bis zur weitestmöglichen Ausnutzung des seitlich zur Verfügung stehenden Raums möglich sein. Andererseits kann auch vorgesehen sein, dass bei einem nur sehr kleinen zur Verfügung stehenden Raum oberhalb des Transportfahrzeugs die Seitenwand nur verschwenkt oder erst verschwenkt und anschließend ein Stück weit in Hochrichtung verfahren wird.

Die erste Öffnungsvorrichtung und/oder die zweite Öffnungsvorrichtung kann/können vorzugsweise mindestens einen Hydraulik- oder Pneumatikzylinder umfassen. Diese zeichnen sich durch einen vergleichsweise geringen Platzbedarf bei gleichzeitig hoher Leistungsfähigkeit aus. Zudem kann für deren Betrieb auf eine häufig bereits bei Nutzfahrzeugen vorhandene hydraulische oder pneumatische Druckquelle zurückgegriffen werden. Möglich sind aber auch andere Ausgestaltungen der Öffnungsvorrichtung(en), insbesondere mit einem elektromotorischen Antrieb, wie beispielsweise in Form einer Spindel oder eines anderen elektromotorischen Linearantriebs.

Um eine vorteilhafte Be- und Entladbarkeit des Transportfahrzeugs zu erreichen, kann vorzugsweise vorgesehen sein, dass die Seitenwand mittels der zweiten Öffnungsvorrichtung zumindest bis in eine horizontale Ausrichtung verschwenkbar ist.

Die Tragstruktur eines erfindungsgemäßen Transportfahrzeugs kann sich nach oben über die vordere Stirnwand und/oder die hintere Stirnwand hinaus erstrecken, um eine gewünschte Beladungshöhe für das Transportfahrzeug zu erreichen, ohne die vordere und/oder hintere Stirnwand selbst entsprechend hoch ausbilden zu müssen.

Zudem kann die Tragstruktur in Querrichtung des Transportfahrzeugs mittig mit der vorderen Stirnwand und/oder der hinteren Stirnwand verbunden sein, was insbesondere dann, wenn zwei entsprechend zu öffnende Seitenwände vorgesehen sind, konstruktive Vorteile aufweisen kann.

Bei einem erfindungsgemäßen Transportfahrzeug ist die erste Öffnungsvorrichtung zwischen der Tragstruktur und dem Tragarm abgestützt, während die zweite Öffnungsvorrichtung zwischen der Tragstruktur und der Seitenwand abgestützt ist. Dadurch können auf konstruktiv einfache Weise die von den beiden Öffnungsvorrichtungen bewirkten, unterschiedlichen Bewegungen der Seitenwand realisiert werden, während sich beide Öffnungsvorrichtungen vorteilhaft jeweils an der Tragstruktur abstützen.

Weiterhin ist vorgesehen, dass die Abstände zwischen den Drehachsen der drehbaren Befestigungen des Tragarms und der zweiten Öffnungsvorrichtung an einerseits der Tragstruktur und andererseits der Seitenwand identisch sind. Dadurch kann gegebenenfalls erreicht werden, dass die Seitenwand bei dem Verfahren in Hochrichtung rein translatorisch bewegt wird.

In einer bevorzugten Ausgestaltung des erfindungsgemäßen Transportfahrzeugs kann zudem noch eine Verriegelungsvorrichtung für die Seitenwand vorgesehen sein, durch die ein ungewolltes Öffnen in der geschlossenen Stellung, insbesondere in Folge einer seitlich gerichteten Belastung durch das Stückgut, verhindert wird. Eine konstruktiv einfache und funktional vorteilhafte Ausgestaltung einer solchen Verriegelungsvorrichtung kann erhalten werden, wenn diese durch das Verfahren der Seitenwand selbsttätig ent- und/oder verriegelbar ausgeführt ist.

Die Erfindung wird nachfolgend anhand eines in den Zeichnungen dargestellten Ausführungsbeispiels näher erläutert. In den Zeichnungen zeigt:
- Fig. 1: in einer Ansicht von hinten ein erfindungsgemäßes Transportfahrzeug mit den Seitenwänden in geschlossener Stellung;
- Fig. 2: das Transportfahrzeug gemäß der Fig. 1 in einer ersten Öffnungsstellung;
- Fig. 3: das Transportfahrzeug gemäß der Fig. 1 in einer zweiten Öffnungsstellung;
- Fig. 4: das Transportfahrzeug gemäß der Fig. 1 in einer dritten Öffnungsstellung; und
- Fig. 5: das Transportfahrzeug gemäß der Fig. 1 in einer vierten Öffnungsstellung.

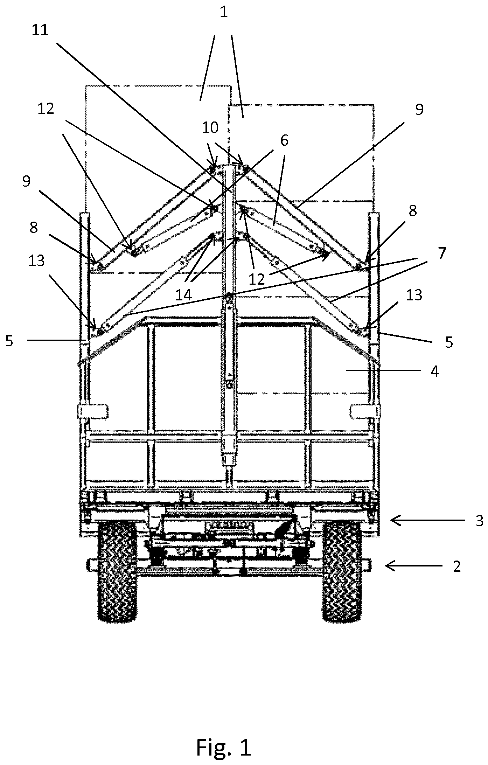

Das in Fig. 1 dargestellte Transportfahrzeug für Stückgut 1 umfasst ein Fahrgestell 2 und eine oberhalb des Fahrgestells 2 angeordnete Ladeplattform 3. Am vorderen und hinteren Ende wird die Ladeplattform 3 von jeweils einer Stirnwand 4 begrenzt. In seitlicher, d.h. Querrichtung des Transportfahrzeugs wird die Ladeplattform 3 zudem beidseitig von Seitenwänden 5 begrenzt, sofern sich diese in ihren geschlossenen Stellungen befinden, wie dies in der Fig. 1 dargestellt ist.

Zum Be- und Entladen der Ladeplattform 3 und damit des Transportfahrzeugs kann jede der Seitenwände 5 in eine Vielzahl von Öffnungsstellungen bewegt werden. Dies erfolgt jeweils mittels zwei ersten Öffnungsvorrichtungen 6 und zwei zweiten Öffnungsvorrichtungen 7 für jede der Seitenwände 5, wobei jeweils eine erste Öffnungsvorrichtung 6 und eine zweite Öffnungsvorrichtung 7 im Bereich des vorderen Endes sowie im Bereich des hinteren Endes jeder Seitenwand 5 angeordnet sind. Alle Öffnungsvorrichtung 6, 7 sind als Hydraulikzylinder ausgeführt.

Sowohl im Bereich des vorderen Endes als auch des hinteren Endes des Transportfahrzeugs sind die Seitenwände 5 jeweils mittels eines ersten Drehgelenks 8 (drehbar um zumindest eine in Längsrichtung des Transportfahrzeugs ausgerichtete Achse) mit einem Tragarm 9 verbunden, der wiederum mittels eines zweiten Drehgelenks 10 (drehbar um zumindest eine in Längsrichtung des Transportfahrzeugs ausgerichtete Achse) mit einer Tragstruktur 11 verbunden ist. Die Tragstruktur 11 ist in Form eines vertikal ausgerichteten, mittig (bezüglich der Querrichtung des Transportfahrzeugs) mit der dazugehörigen Stirnwand 4 verbundenen Tragbalkens ausgeführt. Die Verbindung zwischen den Tragbalken und den dazugehörigen Tragarmen 9 erfolgt an den freien Enden der Tragbalken.

An jedem der Tragarme 9 stützt sich ein als erste Öffnungsvorrichtung 6 dienender Hydraulikzylinder mit einem seiner Enden ab, während das andere Ende, beabstandet von dem jeweils benachbarten zweiten Drehgelenk 10, an der Tragstruktur 11 abgestützt ist. Dabei ist die Verbindung zwischen den ersten Öffnungsvorrichtungen 6 und einerseits den Tragarmen 9 sowie andererseits den Tragstrukturen 11 ebenfalls um in Längsrichtung des Transportfahrzeugs ausgerichtete Achsen drehbar ausgeführt, wozu entsprechende Drehgelenke 12 vorgesehen sind.

Die Hydraulikzylinder der zweiten Öffnungsvorrichtungen 7 sind jeweils mittels eines dritten Drehgelenks 13 mit den dazugehörigen Seitenwänden 5 und mittels jeweils eines vierten Drehgelenks 14 mit den dazugehörigen Tragstrukturen 11 verbunden. Dabei sind die dritten Drehgelenke 13 beabstandet zu den jeweils benachbarten ersten Drehgelenken 8 und die vierten Drehgelenke 14 beabstandet zu den jeweils benachbarten zweiten Drehgelenken 10 angeordnet. Vorgesehen ist, dass die Abstände zwischen jeweils dem ersten Drehgelenk 8 und dem dritten Drehgelenk 13 einerseits und dem zweiten Drehgelenk 10 und dem vierten Drehgelenk 14 andererseits im Wesentlichen identisch sind. Dadurch wird eine ParallelogrammKinematik für die Seitenwände 5 bei einem Verfahren mittels der ersten Öffnungsvorrichtungen 6 (und vollständig eingefahrenen Hydraulikzylindern der zweiten Öffnungsvorrichtungen) erreicht.

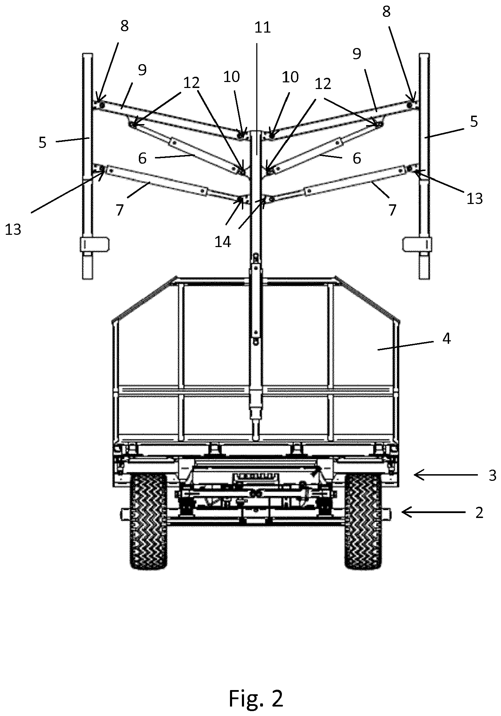

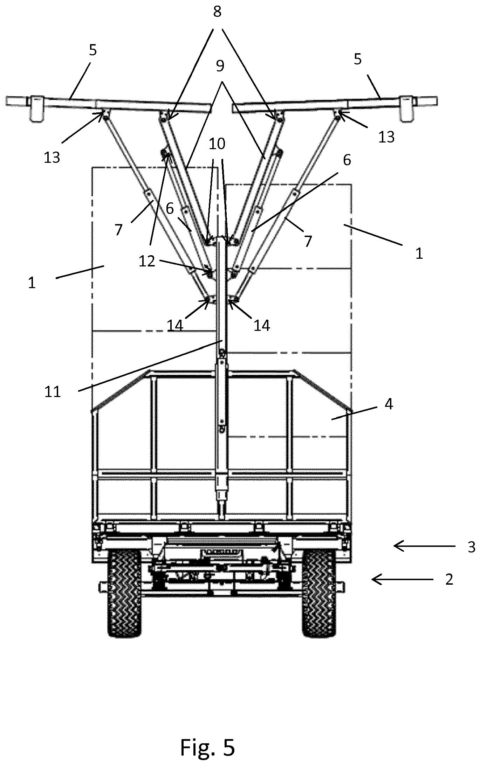

Die erfindungsgemäße Ausgestaltung des Transportfahrzeugs ermöglicht ein variables Öffnen der Seitenwände 5, um die Ladeplatteform 3 be- und entladen zu können. Lediglich beispielhaft sind in den Fig. 2 bis 5 verschiedene Öffnungsstellungen dargestellt, in die die Seitenwände bei einem Öffnen bis hin zu einer vollständig geöffneten Stellung (vgl. Fig. 5) bewegt werden können.

Dabei ist in der Fig. 2 eine erste Öffnungsstellung gezeigt, die durch ein Betätigen der ersten Öffnungsvorrichtungen 6, d.h. ein teilweises Ausfahren der entsprechenden Hydraulikzylinder erreicht wird. Zu erkennen ist, dass die Seitenwände 5 ausgehend von der geschlossenen Stellung gemäß der Fig. 1, in der diese im Wesentlichen vertikal ausgerichtet und alle Hydraulikzylinder vollständig eingefahren sind, bei einer Betätigung der ersten Öffnungsvorrichtungen im Wesentlichen rein translatorisch bewegt werden, wobei diese Bewegungen entsprechend der Parallelogramm-Kinematiken geführt werden. Diese Parallelogramm-Kinematiken führen auch dazu, dass die Seitenwände 5 beim Verfahren nicht ausschließlich in Hochrichtung sondern jeweils auch in Querrichtung bewegt werden. Dies erfolgt ausgehend von der geschlossenen Stellung zunächst nach außen, d.h. weg von der Ladeplattform 3, bis die Tragarme 9 und die Hydraulikzylinder der zweiten Öffnungsvorrichtungen 7 eine horizontale Ausrichtung erreicht haben. Bei einem weitergehenden Verfahren erfolgt dann eine Bewegung der Seitenwände 5 mit einer Bewegungskomponente in Querrichtung nach innen, d.h. in den oberhalb der Ladeplattform 3 angeordneten Raum.

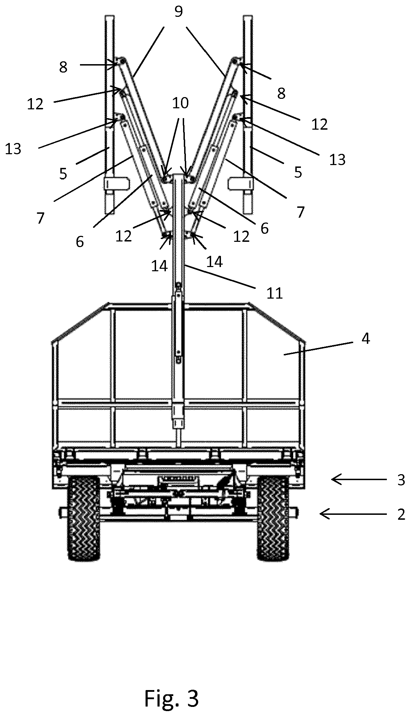

Die in der Fig. 3 dargestellte Öffnungsstellung stellt eine Zwischenendstellung dar. In dieser sind die Hydraulikzylinder der ersten Öffnungsvorrichtungen 6 vollständig ausgefahren, während die Hydraulikzylinder der zweiten Öffnungsvorrichtungen 7 noch vollständig eingefahren sind. Infolge der Parallelogramm-Kinematiken sind die Seitenwände 5 auch in dieser Zwischenendstellung vertikal ausgerichtet und zusätzlich im relevanten Umfang quer in Richtung der Fahrzeugmitte bewegt worden.

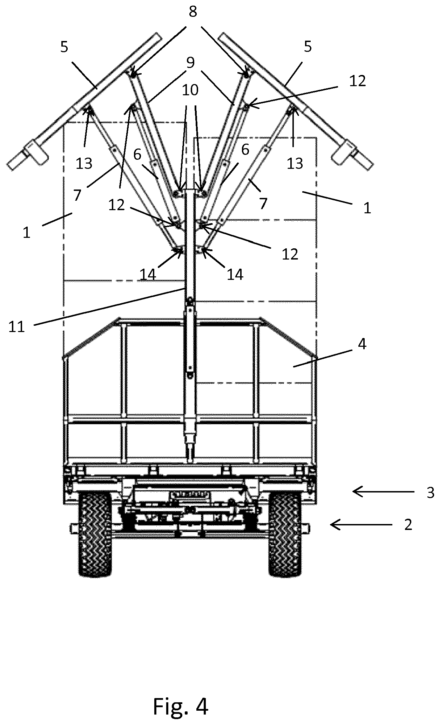

Die Fig. 4 zeigt, wie ausgehend von der Zwischenendstellung gemäß der Fig. 3 die Hydraulikzylinder der zweiten Öffnungsvorrichtungen 7 ausgefahren werden, wodurch die Seitenwände 5 um die von zweiten Drehgelenken 10 ausgebildeten Drehachsen verschwenkt werden. Die Seitenwände 5 werden auf diese Weise weitestmöglich aus dem Raum oberhalb der Ladeplattform heraus bewegt, so dass das Transportfahrzeug so hoch wie möglich mit dem Stückgut 1 beladen werden kann. Dies kann beispielsweise bis zu einer gesetzlich zulässigen Maximalhöhe von 4 m erfolgen. Die Fig. 5 zeigt die Ausrichtung der Seitenwände 5 in der vollständig geöffneten Stellung, bei der alle Hydraulikzylinder der ersten Öffnungsvorrichtungen 6 und der zweiten Öffnungsvorrichtungen 7 vollständig ausgefahren sind. Die Seitenwände 5 weisen dabei eine in etwa horizontale Ausrichtung auf.

Wie sich aus den Fig. 4 und 5 ergibt, ist ein Zurückbewegen der Seitenwände 5 in die geschlossenen Stellungen gemäß der Fig. 1 bei einem bis zur Maximalhöhe beladenen Transportfahrzeug nicht auf dem exakt umgekehrten Wege wie bei dem zuvor (beispielhaft) beschriebenen Öffnen möglich, da bei einem vollständigen Einfahren von zunächst den Hydraulikzylindern der zweiten Öffnungsvorrichtungen 7 die Seitenwände 5 mit der Ladung kollidieren würden. Vielmehr kann dann vorgesehen sein, zunächst die Hydraulikzylinder der ersten Öffnungsvorrichtungen 6 zumindest so weit einzufahren, bis die zwischen den Seitenwänden 5 und den Tragarmen 9 ausgebildeten zweiten Drehgelenke 10 die oberen Seitenkanten der Ladung passiert haben. Dann können die Seitenwände 5 durch ein Einfahren der Hydraulikzylinder der zweiten Öffnungsvorrichtungen 7 wieder bis in die vertikale Ausrichtung verschwenkt werden. Durch ein vollständiges Einfahren der Hydraulikzylinder der ersten Öffnungsvorrichtungen 6 können die Seitenwände 5 anschließend in die vollständig geschlossenen Stellungen gemäß der Fig. 1 bewegt werden.

Selbstverständlich besteht die Möglichkeit, zumindest Abschnitte dieser durch die ersten und zweiten Öffnungsvorrichtungen 6, 7 bewirkten Teilbewegungen gleichzeitig ablaufen zu lassen.

Vorzugsweise ist vorgesehen, dass ein letzter Abschnitt der Bewegungen der Seitenwände in die vollständig geschlossene Stellung sowie ein erster Abschnitt der Bewegungen der Seitenwände aus der vollständig geschlossenen Stellung heraus ausschließlich durch ein Verfahren mittels der ersten Öffnungsvorrichtungen 6 durchgeführt wird. Dadurch kann ein selbsttätiges Ver- und Entriegeln einer Verriegelungsvorrichtung für die Seitenwände 5 realisiert werden, indem beispielsweise an den Seitenwänden 5 angeordnete Verriegelungsbolzen bei diesem letzten beziehungsweise ersten Abschnitt der Bewegungen der Seitenwände in dazugehörige Verriegelungsnuten hinein- beziehungsweise aus diesen herausbewegt werden.

Ein weiterer Vorteil des Transportfahrzeugs liegt darin, dass durch die konkrete Ausgestaltung der von den Tragarmen 9, den Hydraulikzylindern der ersten Öffnungsvorrichtung 6 und der zweiten Öffnungsvorrichtung 7 sowie der Tragstruktur ausgebildete Mechanik sichergestellt wird, dass bei einem Ausfall des die Hydraulikzylinder ansteuernden hydraulischen Systems die Seitenwände 5, sofern Sie in der geschlossenen Stellung entsprechend der Fig. 1 positioniert sind, geschlossen bleiben und sich nicht selbsttätig öffnen können. Bei einem Ausfall des hydraulischen Systems bei geöffneten Seitenwänden 5 sorgt die Mechanik zudem dafür, dass die Seitenwände unter dem Einfluss der Schwerkraft in die geschlossenen Positionen bewegt werden.

### Bezugszeichenliste

- 1.: Stückgut
- 2.: Fahrgestell
- 3.: Ladeplattform
- 4.: Stirnwand
- 5.: Seitenwand
- 6.: erste Öffnungsvorrichtung
- 7.: zweite Öffnungsvorrichtung
- 8.: erstes Drehgelenk
- 9.: Tragarm
- 10.: zweites Drehgelenk
- 11.: Tragstruktur
- 12.: Drehgelenk
- 13.: drittes Drehgelenk
- 14.: viertes Drehgelenk

## Patentansprüche

1. Transportfahrzeug für Stückgut (1) mit einer Ladeplattform (3), einer vorderen Stirnwand und/oder einer hinteren Stirnwand (4) und mindestens einer Seitenwand (5), wobei die Seitenwand (5) mittels einer ersten Öffnungsvorrichtung (6) zunächst in Hochrichtung des Transportfahrzeugs verfahrbar und anschließend mittels einer zweiten Öffnungsvorrichtung (7) um eine in Längsrichtung des Transportfahrzeugs ausgerichtete Achse verschwenkbar ist, wozu eine mit der vorderen Stirnwand (4) und/oder der hinteren Stirnwand (4) verbundene Tragstruktur (11), an der drehbeweglich ein Tragarm (9) für die Seitenwand (5) befestigt ist, vorgesehen ist, wobei der Tragarm (9) drehbeweglich mit der Seitenwand (5) verbunden und die erste Öffnungsvorrichtung (6) zwischen der Tragstruktur (11) und dem Tragarm (9) abgestützt ist, **dadurch gekennzeichnet, dass** die zweite Öffnungsvorrichtung (7) drehbeweglich an der Tragstruktur (11) und der Seitenwand (5) befestigt ist und die Abstände zwischen den Drehachsen der drehbaren Befestigungen des Tragarms (9) und der zweiten Öffnungsvorrichtung (7) an einerseits der Tragstruktur (11) und andererseits der Seitenwand (5) gleich sind.

2. Transportfahrzeug gemäß Anspruch 1, **dadurch gekennzeichnet, dass** die Seitenwand (5) in zumindest einem Bewegungsabschnitt rein translatorisch verfahrbar ist.

3. Transportfahrzeug gemäß einem der vorhergehenden Ansprüche, **dadurch gekennzeichnet, dass** die Seitenwand (5) in einer die Ladeplattform (3) begrenzenden, geschlossenen Stellung eine vertikale Ausrichtung aufweist.

4. Transportfahrzeug gemäß einem der vorhergehenden Ansprüche, **dadurch gekennzeichnet, dass** die Seitenwand (5) bei einem Verfahren in Hochrichtung auch in Querrichtung des Transportfahrzeugs bewegt wird.

5. Transportfahrzeug gemäß einem der vorhergehenden Ansprüche, **dadurch gekennzeichnet, dass** die Seitenwand (5) bis in eine horizontale Ausrichtung verschwenkbar ist.

6. Transportfahrzeug gemäß einem der vorhergehenden Ansprüche, **dadurch gekennzeichnet, dass** sich die Tragstruktur (11) nach oben über die vordere Stirnwand (4) und/oder die hintere Stirnwand (4) hinaus erstreckt.

7. Transportfahrzeug gemäß einem der vorhergehenden Ansprüche, **dadurch gekennzeichnet, dass** die Tragstruktur (11) in Querrichtung des Transportfahrzeugs mittig mit der vorderen Stirnwand (4) und/oder der hinteren Stirnwand (4) verbunden ist.

8. Transportfahrzeug gemäß einem der vorhergehenden Ansprüche, **gekennzeichnet durch** eine Verriegelungsvorrichtung für die Seitenwand (5), die durch ein Verfahren der Seitenwand (5) mittels der Öffnungsvorrichtung (6, 7) ver- und/oder entriegelbar ist.

## Claims

1. Transport vehicle for piece goods (1) having a loading platform (3), a front end wall and/or a rear end wall (4) and at least one side wall (5), wherein the side wall (5) is first displaceable by means of a first opening device (6) in the vertical direction of the transport vehicle, and by means of a second opening device (7) is then pivotable about an axis oriented in the longitudinal direction of the transport vehicle, for which purpose a carrier structure (11) that is connected to the front end wall (4) and/or to the rear end wall (4) is provided, to which a carrier arm (9) for the side wall (5) is fastened in a rotationally movable manner, wherein the carrier arm (9) is connected to the side wall (5) in a rotationally movable manner and the first opening device (6) is supported between the carrier structure (11) and the carrier arm (9), **characterised in that** the second opening device (7) is fastened to the carrier structure (11) and to the side wall (5) in a rotationally movable manner, and the distances between the rotational axes of the rotatable fastenings of the carrier arm (9) and of the second opening device (7) at the carrier structure (11) on the one hand, and at the side wall (5) on the other hand, are equal.

2. Transport vehicle according to claim 1, **characterised in that** the side wall (5) is displaceable purely translationally in at least one movement section.

3. Transport vehicle according to any one of the preceding claims, **characterised in that** the side wall (5) has a vertical orientation in a closed position delimiting the loading platform (3).

4. Transport vehicle according to any one of the preceding claims, **characterised in that** the side wall (5), when displaced in the vertical direction, is also moved in the transverse direction of the transport vehicle.

5. Transport vehicle according to any one of the preceding claims, **characterised in that** the side wall (5) is pivotable into a horizontal orientation.

6. Transport vehicle according to any one of the preceding claims, **characterised in that** the carrier structure (11) extends upwards beyond the front end wall (4) and/or the rear end wall (4).

7. Transport vehicle according to any one of the preceding claims, **characterised in that** the carrier structure (11) is connected to the front end wall (4) and/or to the rear end wall (4) centrally in the transverse direction of the transport vehicle.

8. Transport vehicle according to any one of the preceding claims, **characterised by** a locking device for the side wall (5),which locking device can be locked and/or unlocked by a displacement of the side wall (5) by means of the opening device (6, 7).

## Revendications

1. Véhicule de transport pour des marchandises en balles (1), ledit véhicule de transport comprenant une plateforme de chargement (3), une paroi frontale avant et/ou une paroi frontale arrière (4) et au moins une paroi latérale (5), où la paroi latérale (5), au moyen d'un premier dispositif d'ouverture (6), peut être déplacée d'abord dans le sens de la hauteur du véhicule de transport, puis, au moyen d'un deuxième dispositif d'ouverture (7), peut être déplacée en pivotant autour d'un axe orienté dans le sens de la longueur du véhicule de transport où, dans ce but, il est prévu une structure porteuse (11) sur laquelle est fixé, mobile en rotation, un bras porteur (9) prévu pour la paroi latérale (5), ladite structure porteuse étant reliée à la paroi frontale avant (4) et/ou à la paroi frontale arrière (4), où le bras porteur (9) est relié à la paroi latérale (5) en étant mobile en rotation, et le premier dispositif d'ouverture (6) est supporté entre la structure porteuse (11) et le bras porteur (9),
**caractérisé en ce que** le deuxième dispositif d'ouverture (7) est fixé en étant mobile en rotation sur la structure porteuse (11) et sur la paroi latérale (5), et les intervalles entre les axes de rotation des fixations tournantes du bras porteur (9) et du deuxième dispositif d'ouverture (7) sont identiques, d'une part sur la structure porteuse (11) et d'autre part sur la paroi latérale (5).

2. Dispositif de transport selon la revendication 1, **caractérisé en ce que** la paroi latérale (5) peut être déplacée purement en translation dans au moins une partie de mouvement.

3. Dispositif de transport selon l'une des revendications précédentes, **caractérisé en ce que** la paroi latérale (5) présente une orientation verticale dans une position fermée délimitant la plateforme de chargement (3).

4. Véhicule de transport selon l'une quelconque des revendications précédentes, **caractérisé en ce que** la paroi latérale (5), au cours d'un déplacement, est déplacée dans le sens de la hauteur ainsi que dans le sens transversal du véhicule de transport.

5. Véhicule de transport selon l'une quelconque des revendications précédentes, **caractérisé en ce que** la paroi latérale (5) peut pivoter jusqu'à atteindre une orientation horizontale.

6. Véhicule de transport selon l'une quelconque des revendications précédentes, **caractérisé en ce que** la structure porteuse (11) s'étend, vers le haut, au-delà de la paroi frontale avant (4) et/ou au-delà de la paroi frontale arrière (4).

7. Véhicule de transport selon l'une quelconque des revendications précédentes, **caractérisé en ce que** la structure porteuse (11), dans le sens transversal du véhicule de transport, est reliée, au milieu, à la paroi frontale avant (4) et/ou à la paroi frontale arrière (4).

8. Véhicule de transport selon l'une quelconque des revendications précédentes, **caractérisé par** un dispositif de verrouillage prévu pour la paroi latérale (5), dispositif de verrouillage qui peut être verrouillé et/ou déverrouillé par un déplacement de la paroi latérale (5) au moyen du dispositif d'ouverture (6, 7).
